# EUROPÄISCHE PATENTSCHRIFT

(11) **EP 1 249 467 B1**
(45) Veröffentlichungstag und Bekanntmachung des Hinweises auf die Patenterteilung: **12.09.2007**
(21) Anmeldenummer: 02004728.8
(22) Anmeldetag: 01.03.2002
(51) Int. Cl.: C08J 7/04, C09D 5/03, C09D 123/00, C09D 123/04, C08K 3/22, C08K 3/34, C09D 133/00, C09D 163/00, B05D 5/02

(54) **Selbstreinigende Oberflächen durch hydrophobe Strukturen und Verfahren zu deren Herstellung**
Self-cleaning surfaces due to hydrophobic structure and process for the preparation thereof
Surfaces auto-nettoyantes par leur structure hydrophobe et leur procédé de préparation

(30) Priorität: 12.04.2001 DE 10118351
(43) Veröffentlichungstag der Anmeldung: 16.10.2002
(73) Patentinhaber: Degussa GmbH, 40474 Düsseldorf (DE)
(72) Erfinder: Nun, Edwin, Dr., 48727 Billerbeck (DE); Oles, Markus, Dr., 45525 Hattingen (DE); Schleich, Bernhard, Dr., 45657 Recklinghausen (DE)

(56) Entgegenhaltungen:
- WO-A-99/36481
- CH-A- 268 258
- DE-A- 10 022 246
- DE-A- 19 917 367
- FR-A- 2 150 474
- GB-A- 1 335 957
- GB-A- 2 311 527

## Beschreibung

Die vorliegende Erfindung betrifft selbstreinigende Oberflächen und Verfahren zu deren Herstellung.

Gegenstände mit extrem schwer benetzbaren Oberflächen weisen eine Reihe von wirtschaftlich bedeutsamen Merkmalen auf. Das wirtschaftlich bedeutendste Merkmal ist dabei die selbstreinigende Wirkung von schwerbenetzbaren Oberflächen, da die Reinigung von Oberflächen zeit- und kostenintensiv ist. Selbstreinigende Oberflächen sind somit von höchstem wirtschaftlichen Interesse. Haftmechanismen werden in der Regel durch grenzflächenenergetische Parameter zwischen den beiden sich berührenden Oberflächen bedingt. In der Regel versuchen dabei die Systeme ihre freie Grenzflächenenergie zu erniedrigen. Liegen die freien Grenzflächenenergien zwischen zwei Komponenten von sich aus schon sehr niedrig, so kann allgemein davon ausgegangen werden, dass die Haftung zwischen diesen beiden Komponenten schwach ausgeprägt ist. Wichtig ist dabei die relative Erniedrigung der freien Grenzflächenenergie. Bei Paarungen mit einer hohen und einer niedrigen Grenzflächenenergie kommt es sehr oft auf die Möglichkeiten der Wechselwirkungen an. So ist beispielsweise beim Aufbringen von Wasser auf eine hydrophobe Oberfläche nicht möglich, eine merkliche Erniedrigung der Grenzflächenenergie herbeizuführen. Dies ist daran erkennbar, dass die Benetzung schlecht ist. Aufgebrachtes Wasser bildet Tropfen mit sehr hohem Kontaktwinkel. Perfluorierte Kohlenwasserstoffe, z.B. Polytetrafluorethylen, haben sehr niedrige Grenzflächenenergie. Auf solchen Oberflächen haften kaum irgendwelche Komponenten bzw. auf solchen Oberflächen abgelagerte Komponenten können sehr leicht wieder entfernt werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US-PS 5 599 489 offenbart ein Verfahren, bei dem eine Oberfläche durch Beschuss mit Partikeln einer entsprechenden Größe und anschließender Perfluorierung besonders abweisend ausgestattet werden kann. Ein anderes Verfahren beschreiben H. Saito et al in "Service Coatings International" 4, 1997, S. 168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung festgestellt wurde.

In US-PS 3 354 022 und WO 96/04123 sind weitere Verfahren zur Erniedrigung der Benetzbarkeit von Gegenständen durch topologische Veränderungen der Oberflächen beschrieben. Hier werden künstliche Erhebungen bzw. Vertiefungen mit einer Höhe von ca. 5 bis 1 000 µm und einem Abstand von ca. 5 bis 500 µm auf hydrophobe oder nach der Strukturierung hydrophobierte Werkstoffe aufgebracht. Oberflächen dieser Art führen zu einer schnellen Tropfenbildung, wobei die abrollenden Tropfen Schmutzteilchen aufnehmen und somit die Oberfläche reinigen.

Dieses Prinzip ist der Natur entlehnt. Kleine Kontaktflächen erniedrigen die Van-der-Waal's-Wechselwirkung, die für die Haftung an ebenen Oberflächen mit niedriger Oberflächenenergie verantwortlich ist. Beispielsweise sind die Blätter der Lotus-Pflanze mit Erhebungen aus einem Wachs versehen, die die Kontaktfläche zu Wasser herabsetzen. WO 00/58410 beschreibt die Strukturen und beansprucht die Ausbildung selbiger durch Aufsprühen von hydrophoben Alkoholen, wie Nonakosan-10-ol, oder Alkandiolen, wie Nonakosan-5,10-diol. Nachteilig hieran ist die mangelhafte Stabilität der selbstreinigenden Oberflächen, da Detergentien zur Ablösung der Struktur führen.

Eine weitere Methode, leicht reinigbare Oberflächen zu erzeugen, ist in DE 199 17 367 A1 beschrieben. Überzüge auf Basis fluorhaltiger Kondensate sind aber nicht selbstreinigend. Die Kontaktfläche zwischen Wasser und Oberfläche ist zwar reduziert, jedoch nicht in ausreichendem Maße.

EP 1 040 874 A2 beschreibt das Abprägen von Mikrostrukturen und beansprucht die Verwendung solcher Strukturen in der Analytik (Mikrofluidik). Nachteilig an diesen Strukturen ist die ungenügende mechanische Stabilität.

In JP 11171592 wird ein Wasser abweisendes Produkt und dessen Herstellung beschrieben, wobei die Schmutz abweisende Oberfläche dadurch hergestellt wird, dass ein Film auf die zu behandelnde Oberfläche aufgetragen wird, der feine Partikel aus Metalloxid und das Hydrolysat eines Metallalkoxids oder - chelats aufweist. Zur Verfestigung dieses Films muss das Substrat, auf welches der Film aufgebracht wurde, bei Temperaturen oberhalb 400 °C gesintert werden. Das Verfahren ist deshalb nur für Substrate einsetzbar, welche auch bei Temperaturen oberhalb von 400 °C stabil sind.

Aufgabe der vorliegenden Erfindung war die Bereitstellung von besonders gut selbstreinigenden Oberflächen mit Strukturen im Nanometerbereich, sowie ein einfaches Verfahren zur Herstellung solcher selbstreinigenden Oberflächen.

Außerdem war Aufgabe der vorliegenden Erfindung ein Verfahren zur Herstellung von selbstreinigenden Oberflächen bereitzustellen, bei denen das beschichtete Material nur geringen chemischen oder physikalischen Belastungen ausgesetzt werden muss.

Gegenstand der vorliegenden Erfindung ist deshalb eine selbstreinigende Oberfläche gemäß zumindest einem der Ansprüche 1 bis 7, die eine künstliche, zumindest teilweise hydrophobe Oberflächenstruktur aus Erhebungen und Vertiefungen aufweist, welche dadurch gekennzeichnet ist, dass die Erhebungen und Vertiefungen durch auf der Oberfläche fixierte strukturbildende Partikel, die eine zerklüftete Struktur mit Erhebungen und/oder Vertiefungen im Nanometerbereich und hydrophobe Eigenschaften aufweisen, sowie die zur Fixierung eingesetzten Fixiermittelpartikel gebildet werden, die somit ebenfalls zur Bildung der Erhebungen und Vertiefungen beitragen, wobei die Oberflächen der Fixiermittelpartikel mit benachbarten Oberflächen von Fixiermittelpartikeln und/oder strukturbildenden Partikeln zumindest teilweise aneinander haften, so dass die Struktur im Nanometerbereich der strukturbildenden Partikeln erhalten bleibt.

Ebenfalls ist Gegenstand der vorliegenden Erfindung ein Verfahren gemäß zumindest einem der Ansprüche 8 bis 15 zur Herstellung von selbstreinigenden Oberflächen gemäß zumindest einem der Ansprüche 1 bis 7, die eine künstliche, zumindest teilweise hydrophobe Oberflächenstruktur aus Erhebungen und Vertiefungen aufweisen, wobei die Erhebungen und Vertiefungen durch an der Oberfläche fixierte strukturbildende Partikel gebildet werden, dadurch gekennzeichnet, dass die strukturbildenden Partikel, die eine zerklüftete Struktur mit Erhebungen und/oder Vertiefungen im Nanometerbereich und hydrophobe Eigenschaften aufweisen, an der Oberfläche durch Fixiermittelpartikel fixiert werden, die ebenfalls zur Bildung der Erhebungen und Vertiefungen beitragen, und dass das Verfahren die folgenden Schritte umfasst:
a) Aufbringen von Fixiermittelpartikeln und strukturbildenden Partikeln, auf eine Oberfläche, wobei zuerst die Fixiermittelpartikel und anschließend die strukturbildenden Partikel auf die Oberfläche aufgebracht werden und
b) Anschmelzen der Fixiermittelpartikel zur Fixierung der strukturbildenden Partikel und der Fixiermittelpartikel auf der Oberfläche durch kurzzeitiges Erwärmen, wobei die Temperatur, bei der das Anschmelzen durchgeführt wird, und die Dauer des Anschmelzens so zu wählen sind, dass die Fixiermittelpartikel nur teilweise verschmelzen, wobei die Fixiermittelpartikel an ihren Berührungspunkten zusammenkleben und die Struktur, insbesondere die Struktur im Nanometerbereich, der strukturbildenden Partikel erhalten bleibt

Durch das erfindungsgemäße Verfahren sind selbstreinigende Oberflächen zugänglich, die strukturbildende Partikel und Fixiermittelpartikel aufweisen, die gemeinsam die gewünschte Oberflächenstruktur bilden. Durch die Verwendung von Partikeln, welche eine zerklüftete Struktur aufweisen, werden auf einfache Weise Oberflächen zugänglich, die bis in den Nanometerbereich strukturiert sind. Um diese Struktur im Nanometerbereich zu erhalten ist es notwendig, dass die Partikel nicht wesentlich durch die Fixiermittelpartikel, mit welchen sie an der Oberfläche fixiert sind, benetzt sind, da sonst die Struktur im Nanobereich verloren gehen würde.

Die erfindungsgemäßen selbstreinigenden Oberflächen sowie ein Verfahren zu deren Herstellung werden im folgenden beispielhaft beschrieben, wobei die erfindungsgemäßen Oberflächen und das erfindungsgemäße Verfahren nicht auf die beispielhaften Ausführungsformen beschränkt sein sollen

Die erfindungsgemäße selbstreinigende Oberfläche, die eine künstliche, zumindest teilweise hydrophobe Oberflächenstruktur aus Erhebungen und Vertiefungen aufweist, zeichnet sich dadurch aus, dass die Erhebungen und Vertiefungen durch auf der Oberfläche fixierte strukturbildende Partikel, die eine zerklüftete Struktur mit Erhebungen und/oder Vertiefungen im Nanometerbereich und hydrophobe Eigenschaften aufweisen, sowie die zur Fixierung eingesetzten Fixiermittelpartikel gebildet werden, die somit ebenfalls zur Bildung der Erhebungen und Vertiefungen beitragen, wobei die Oberflächen der Fixiermittelpartikel mit benachbarten Oberflächen von Fixiermittelpartikeln und/oder strukturbildenden Partikeln zumindest teilweise aneinander haften, so dass die Struktur im Nanometerbereich der strukturbildenden Partikeln erhalten bleibt.

Vorzugsweise weisen die strukturbildenden Partikel Erhöhungen mit einer Höhe von im Mittel 20 bis 500 nm, besonders bevorzugt von 50 bis 200 nm auf. Der Abstand dieser Erhöhungen bzw. Vertiefungen auf den Partikeln beträgt vorzugsweise weniger als 500 nm, ganz besonders bevorzugt weniger als 200 nm. Die selbstreinigenden Oberflächen weisen die strukturbildenden Partikel auf der Oberfläche vorzugsweise in Abständen von 0 - 10 Partikeldurchmesser, insbesondere in Abständen von 0 - 3 und ganz besonders bevorzugt von 1 - 2 Partikeldurchmesser, auf.

Die zerklüfteten Strukturen mit Erhebungen und/oder Vertiefungen im Nanometerbereich können z.B. über Hohlräume, Poren, Riefen, Spitzen und/oder Zacken gebildet werden. Die Partikel selbst weisen eine durchschnittliche Größe von kleiner 50 µm, vorzugsweise von kleiner 30 µm und ganz besonders bevorzugt von kleiner 20 µm auf. Die Dibutylphthalat-Adsorbption, angelehnt an DIN 53 601, liefert Werte zwischen 100 und 350 ml/100 g, bevorzugt Werte zwischen 250 und 350 ml/100 g.

Bevorzugt weisen die strukturbildenden Partikel eine BET-Oberfläche von 50 bis 600 Quadratmeter pro Gramm auf. Ganz besonders bevorzugt weisen die Partikel eine BET-Oberfläche von 50 bis 200 m²/g auf.

Als strukturbildende Partikel können verschiedenste Verbindungen aus vielen Bereichen der Chemie und/oder der Natur eingesetzt werden. Vorzugsweise weisen die Partikel zumindest ein Material, ausgewählt aus Silikaten, dotierten Silikaten, Mineralien, Metalloxiden, Kieselsäuren, Polymeren, beschichteten Metallpulvern auf. Ganz besonders bevorzugt weisen die Partikel pyrogene Kieselsäuren oder Fällungskieselsäuren, insbesondere Aerosile, Al₂O₃, SiO₂, TiO₂, ZrO₂, mit Aerosil R974 ummanteltes Zinkpulver oder pulverförmige Polymere, wie z.B. kryogen gemahlenes oder sprühgetrocknetes Polytetrafluorethylen (PTFE), auf.

Die fixierten Partikel der selbstreinigenden Oberflächen weisen neben den zerklüfteten Strukturen auch hydrophobe Eigenschaften auf. Die Partikel können dabei aber selbst hydrophob sein, wie z.B. PTFE aufweisende Partikel. Das Hydrophobieren der fixierten Partikel kann aber auch nachträglich auf eine dem Fachmann bekannte Weise erfolgt sein.

Die erfindungsgemäß vorhandenen Fixiermittelpartikel umfassen Verbindungen ausgewählt aus der Gruppe der Schmelzkleber und/oder Pulverlacke. Besonders bevorzugt werden diese Schmelzkleber und/oder Pulverlacke ausgewählt aus den Ethylen/Ethylacrylat-Copolymeren, Ethylen/Vinylacetat-Copolymeren, Polyamiden, Epoxydharze, Polyethersulfonen, Polyisobutenen oder Polyvinylbutyralen. Ganz besonders ist der als Fixiermittel verwendete Schmelzkleber ein Copolymer aus thermoplastischem Polyamid mit Caprolacton.

Die Fixiermittelpartikel weisen vorzugsweise eine durchschnittliche Größe von kleiner 50 µm auf. Bevorzugt weisen die Fixiermittelpartikel eine durchschnittliche Größe die der Größe der strukturbildenden Partikel entspricht auf. Es kann aber auch vorteilhaft sein, wenn die Fixiermittelpartikel eine von 10 bis 70 %, vorzugsweise 25 bis 50 % kleinere durchschnittliche Größe als die der strukturbildenden Partikel aufweisen.

Die erfindungsgemäßen selbstreinigenden Oberflächen weisen eine Abrollwinkel von kleiner 20 °, besonders bevorzugt kleiner 10° auf, wobei der Abrollwinkel so definiert ist, dass ein aus 1 cm Höhe auf eine auf einer schiefen Ebene ruhenden planen Oberfläche aufgebrachter Wassertropfen abrollt. Die Fortschreitwinkel und die Rückzugswinkel liegen bevorzugt oberhalb von 140°, besonders bevorzugt oberhalb von 150° und weisen eine Hysterese von kleiner 10° auf.

Je nach verwendeten Fixiermittelpartikeln und je nach Größe und Material der eingesetzten strukturbildenden Partikel kann erreicht werden, dass die selbstreinigenden Oberflächen semitransparent sind. Insbesondere können die erfindungsgemäßen Oberflächen kontakttransparent sein, dass heißt das nach Erstellen einer erfindungsgemäßen Oberfläche auf einem beschrifteten Gegenstand diese Beschriftung, in Abhängigkeit von der Größe der Schrift, weiterhin lesbar ist. Je feiner die verwendeten Partikel sind, desto besser sind die transparenten Eigenschaften der selbstreinigenden Oberflächen.

Die erfindungsgemäßen selbstreinigenden Oberflächen werden durch das erfindungsgemäße Verfahren zur Herstellung dieser Oberflächen hergestellt. Dieses erfindungsgemäße Verfahren zur Herstellung von selbstreinigenden Oberflächen gemäß zumindest einem der Ansprüche 1 bis 7, die eine künstliche, zumindest teilweise hydrophobe Oberflächenstruktur aus Erhebungen und Vertiefungen aufweisen, wobei die Erhebungen und Vertiefungen durch an der Oberfläche fixierte strukturbildende Partikel gebildet werden, zeichnet sich dadurch aus, dass die strukturbildenden Partikel, die eine zerklüftete Struktur mit Erhebungen und/oder Vertiefungen im Nanometerbereich und hydrophobe Eigenschaften aufweisen, an der Oberfläche durch Fixiermittelpartikel fixiert werden, die ebenfalls zur Bildung der Erhebungen und Vertiefungen beitragen.
Vorzugsweise werden solche strukturbildenden Partikel, die zumindest ein Material, ausgewählt aus Silikaten, dotierten Silikaten, Mineralien, Metalloxiden, Kieselsäuren oder Polymeren aufweisen, eingesetzt. Ganz besonders bevorzugt weisen die Partikel pyrogene Silikate oder Kieselsäuren, insbesondere Aerosile, Al₂O₃, SiO₂, TiO₂, ZrO₂ mit Aerosil R 974 ummanteltes
Zn-Pulver oder pulverförmige Polymere, wie z.B. kryogen gemahlenes oder sprühgetrocknet Polytetrafluorethylen (PTFE), auf.

Es werden Partikel, die zerklüftete Strukturen mit Erhebungen und/oder Vertiefungen im Nanometerbereich aurweisen, eingesetzt. Auf diese Weise sind selbstreinigende Oberflächen zugänglich, die ein besonders gutes Selbstreinigungsverhalten aufweisen. Bevorzugt werden Partikel mit einer BET-Oberfläche von 50 bis 600 m²/g eingesetzt. Besonders bevorzugt werden Partikel eingesetzt, die eine BET-Oberfläche von 50 bis 200 m²/g aufweisen.

Die Partikel zur Generierung der selbstreinigenden Oberflächen weisen neben den zerklüfteten Strukturen auch hydrophobe Eigenschaften auf. Die Partikel können selbst hydrophob sein, wie z.B. PTFE aufweisende Partikel, oder die eingesetzten Partikel können hydrophobiert worden sein. Das Hydrophobieren der Partikel kann auf eine dem Fachmann bekannte Weise erfolgen. Typische hydrophobierte Partikel sind z.B. Feinstpulver wie Aerosil-VPR 411, Aerosil R 974 oder Aerosil-R 8200 (Degussa AG), die käuflich zu erwerben sind.

Die als Fixiermittelpartikel eingesetzten Fixiermittel sind vorzugsweise Verbindungen, ausgewählt aus der Gruppe der Schmelzkleber und/oder Pulverlacke. Diese Schmelzkleber und/oder Pulverlacke weisen vorzugsweise zumindest eine Verbindung, ausgewählt aus den Ethylen/Ethylacrylat-Copolymeren, Ethylen/Vinylacetat-Copolymeren, Polyamiden, Polyethersulfonen, Polyisobutenen, Epoxydharze oder Polyvinylbutyralen auf.

Das erfindungsgemäße Verfahren umfasst die Schritte
a) Aufbringen von Fixiermittelpartikeln und strukturbildenden Partikeln, auf eine Oberfläche, wobei zuerst die Fixiermittelpartikel und anschließend die strukturbildenden Partikel auf die Oberfläche aufgebracht werden, und
b) Anschmelzen der Fixiermittelpartikel zur Fixierung der strukturbildenden Partikel und der Fixiermittelpartikel auf der Oberfläche durch kurzzeitiges Erwärmen, wobei die Temperatur, bei der das Anschmelzen durchgeführt wird, und die Dauer des Anschmelzens so zu wählen sind, dass die Fixiermittelpartikel nur teilweise verschmelzen, wobei die Fixiermittelpartikel an ihren Berührungspunkten zusammenkleben und die Struktur, insbesondere die Struktur im Nanometerbereich, der strukturbildenden Partikel erhalten bleibt.

Es kann vorteilhaft sein, die Fixiermittelpartikel auf der Oberfläche vor dem Aufbringen der strukturbildenden Partikel anzuschmelzen, wobei unter Anschmelzen (oder auch Ansintern) das Zusammenkleben von Fixiermittelpartikeln an ihren Berührungspunkten zu verstehen ist.

Das Aufbringen der Partikel auf die Oberfläche kann auf eine dem Fachmann bekannte Weise z.B. durch Aufsprühen oder Aufpudern erfolgen. Die Oberfläche kann, je nach Verwendung des mit einer selbstreinigenden Oberfläche versehenen Gegenstandes, bereits Korrosionsschutz-, Farb- oder Warnbeschichtungen aufweisen.

Das erfindungsgemäße Anschmelzen erfolgt durch kurzzeitiges Erwärmen, wobei unter Anschmelzen (oder auch Ansintern) ein Erweichen der Fixiermittelpartikel der Gestalt verstanden wird, dass die Oberfläche der Fixiermittelpartikel mit benachbarten Oberflächen von Fixiermittelpartikeln und/oder strukturbildenden Partikeln sowie der Oberfläche des Gegenstandes, welcher mit einer selbstreinigenden Oberfläche versehen wird, nach dem Erkalten zumindest teilweise aneinander haften. Die Haftung kann durch chemische Bindung aber auch durch physikalische Kräfte hergestellt worden sein.

Die Temperatur, bei der das Anschmelzen durchgeführt wird, sowie die Dauer des Anschmelzens sind so zu wählen, dass die Fixiermittelpartikel nur teilweise verschmelzen und die Struktur, insbesondere die Struktur im Nanometerbereich, der strukturbildenden Partikel erhalten bleibt.

Das Erwärmen kann auf eine dem Fachmann bekannte Weise, z.B. mittels eines Ofens oder einer anderen Wärmequelle erfolgen. Bevorzugt erfolgt das Erwärmen mittels Infrarotstrahlung. Es kann aber auch vorteilhaft sein, die Fixiermittelpartikel auf eine erwärmte Oberfläche aufzubringen, die nach dem Aufbringen abgekühlt wird. Dies kann insbesondere dann vorteilhaft sein, wenn die Oberfläche des Gegenstandes selbst der Gestalt ist, dass die aufgebrachten Fixiermittelpartikel nicht stabil auf dieser Oberfläche verbleibt. Gründe hierfür können z.B. auch in der Geometrie des Gegenstandes zu suchen sein, oder aber in einer ungenügenden Adhäsion der pulverförmigen Beschichtungsmittel (Fixiermittelpartikel oder strukturbildenden Partikel) zum Substrat.

Durch leichtes Erwärmen können die strukturbildenden Partikel zumindest teilweise fest an die Fixiermittelpartikel gebunden werden, ohne dass ein Umschmelzen der strukturbildenden Partikel durch das Fixiermittel stattfindet, wodurch die Struktur der strukturbildenden Partikel im Nanometerbereich verlorengehen würde.

Die erfindungsgemäß eingesetzten Fixiermittelpartikel weisen vorzugsweise eine durchschnittliche Größe von kleiner 50 µm auf. Bevorzugt weisen die Fixiermittelpartikel eine durchschnittliche Größe, die der Größe der strukturbildenden Partikel entspricht, auf. Es kann aber auch vorteilhaft sein, wenn die Fixiermittelpartikel eine von 10 bis 70 %, vorzugsweise 25 bis 50 % kleinere durchschnittliche Größe als die der strukturbildenden Partikel aufweisen.

Werden hydrophile strukturbildende Partikel mit hydrophilen Fixiermittelpartikeln zur Herstellung der selbstreinigenden Oberflächenstruktur eingesetzt, wird diese mit zumindest einer Verbindung aus der Gruppe der Alkylsilane, Alkyldisilazane, Wachse, Paraffine, Fettsäureester, fluorierte und/oder funktionalisierte Alkane oder Perfluoralkylsilane, behandelt um die selbstreinigende Oberfläche mit hydrophoben Eigenschaften auszustatten. Vorzugsweise erfolgt die Behandlung dadurch, dass die Partikel aufweisende Oberfläche, die hydrophobiert werden soll, in eine Lösung, die ein Hydrophobierungsreagenz wie z.B. Alkylsilane aufweist, getaucht wird, überschüssiges Hydrophobierungsreagenz abgetropft wird und die Oberfläche bei einer möglichst hohen Temperatur getempert. Die Behandlung kann aber auch durch Besprühen der Oberfläche mit einem ein Hydrophobierungsreagenz aufweisenden Medium und anschließende Temperung, erfolgen. Eine solche Behandlung ist z.B. für die Behandlung von Stahlträgern oder anderen schweren oder sperrigen Gegenständen bevorzugt. Die Begrenzung der Temperatur ist durch die Erweichungstemperaturen der Fixiermittel, der strukturbildenden Partikel und des Substrats, auf welches die selbstreinigende Oberfläche aufgebracht wurde, limitiert.

Das erfindungsgemäße Verfahren gemäß zumindest einem der Ansprüche 8 bis 15 kann hervorragend zur Herstellung von selbstreinigenden Oberflächen auf planaren oder nichtplanaren Gegenständen, insbesondere auf nichtplanaren Gegenständen verwendet werden. Dies ist mit den herkömmlichen Verfahren nur eingeschränkt möglich. Insbesondere über Verfahren, bei denen vorgefertigte Filme auf eine Oberfläche aufgebracht werden oder bei Verfahren, bei denen eine Struktur durch Prägen erstellt werden soll, sind nichtplanare Gegenstände, wie z.B. Skulpturen, nicht oder nur eingeschränkt zugänglich. Naturgemäße kann das erfindungsgemäße Verfahren aber auch zur Herstellung von selbstreinigenden Oberflächen auf Gegenständen mit planaren Oberflächen, wie z.B. Gewächshäusern oder öffentlichen Verkehrsmitteln verwendet werden. Insbesondere die Anwendung des erfindungsgemäßen Verfahrens zur Herstellung von selbstreinigenden Oberflächen an Gewächshäusern weist Vorteile auf, da mit dem Verfahren selbstreinigende Oberflächen z.B. auch auf transparenten Materialien wie Glas oder Plexiglas^{®} hergestellt werden können und die selbstreinigende Oberfläche zumindest soweit transparent ausgebildet werden kann, dass für das Wachstum der Pflanzen im Gewächshaus genügend Sonnenlicht durch die mit einer selbstreinigenden Oberfläche ausgerüstete transparente Oberfläche dringen kann. Im Gegensatz zu herkömmlichen Gewächshäusern, die regelmäßig von Laub-, Staub-, Kalk- und biologischem Material, wie z.B. Algen, gereinigt werden müssen, können Gewächshäuser, die eine erfindungsgemäße Oberfläche gemäß einem der Ansprüche 1 bis 7, aufweisen, mit längeren Reinigungsintervallen betrieben werden.

Ebenso vorteilhaft kann das erfindungsgemäße Verfahren zur Ausrüstung von tragenden oder nicht tragenden Elementen des Hochbaus mit selbstreinigenden Oberflächen, ganz besonders dann, wenn ein Korrosionsschutz, eine Signalmarkierung, wie beispielsweise gelb-schwarzgestreifte Warntafeln oder eine Farbbeschichtung aufweist verwendet werden. Auf diese Weise kann erreicht werden, dass diese Elemente nicht dauerhaft verschmutzt werden, wodurch die Reinigungsintervalle vergrößert und signalisierende Farbgebungen ohne Beeinträchtigung durch Schmutz dauerhaft wahrnehmbar werden.

Das erfindungsgemäße Verfahren kann außerdem zur Herstellung von selbstreinigenden Oberflächen auf nicht starren Oberflächen von Gegenständen, verwendet werden, wie z.B. Schirmen oder anderen Oberflächen, die flexibel gehalten sind. Ganz besonders bevorzugt kann das erfindungsgemäße Verfahren gemäß zumindest einem der Ansprüche 8 bis 15, zur Herstellung selbstreinigender Oberflächen auf flexiblen oder unflexiblen Wänden im Sanitärbereich verwendet werden. Solche Wände können z.B. Trennwände in öffentlichen Toiletten, Wände von Duschkabinen, Schwimmbädern oder Saunen, aber auch Duschvorhänge (flexible Wand) sein.

Die nachfolgenden Beispiele sollen die erfindungsgemäßen Oberflächen bzw. das Verfahren zur Herstellung der Oberflächen näher erläutern, ohne dass die Erfindung auf diese Ausführungsarten beschränkt sein soll.

### Vergleichsbeispiel 1:

Auf eine 2 mm Dicke Platte aus Polymethylmethacrylat (PMMA) wird eine Mischung bestehend aus 50 Gew.-% Aeroperl 90/30 der Degussa AG, einer sprühgetrockneten pyrogenen Kieselsäure mit einer BET-Oberfläche von 90 m²/g, und 50 Gew.-% Polyamid-Schmelzkleber-Pulver (Vestamelt P06, Degussa AG) mit einer durchschnittlichen Teilchengröße unterhalb von <50 µm elektrostatisch aufgesprüht. Zur Fixierung der Partikel auf der Platte und Erzeugung einer zerklüfteten Struktur wird die Platte 5 min bei 108 °C getempert. Anschließend wird die Platte mit Antispread^{®} (Dr. Tillwich GmbH), einem Oberflächenhydrophobierungsmittel, behandelt, wodurch die Hydrophobie der Partikel, bzw. der Oberfläche eingestellt wird. Die Charakterisierung der Oberfläche erfolgte anfänglich visuell und ist mit +++ protokolliert. +++ bedeutet, Wassertropfen bilden sich nahezu vollständig aus. Gemessen wurden Fortschreit- und Rückzugswinkel zu jeweils größer als 150°. Die zugehörige Hysterese liegt unterhalb von 10°.

### Beispiel 1:

Ein Pulverlack (FREOPOX EKP-7, Emil Frei GmbH & Co.) wurde zu einer 200 µm dicken Schicht auf ein Nickelblech kalt aufgerakelt und mit einem hydrophoben Aerosil (R 8200, Degussa AG) bestreut. Diese Mischung und das Nickelblech wurden 3 Minuten einer Temperatur von 180 °C ausgesetzt. Nach dem Erkalten ließ sich nur eine geringfügige Verbesserung des Abperlverhaltens von Wasser beobachten.

### Beispiel 2:

Es wurde der Versuch aus Beispiel 1 wiederholt, jedoch wurde das Aerosil R 8200 mittels eines Metallrollers in den geschmolzenen Lack eingedrückt. Es wurde weitere 3 Minuten nachgetempert. Die erkaltete Platte zeigt nur einen geringfügig verbessertes Abperlverhalten gegenüber dem reinen Pulverlack.

### Beispiel 3:

Es wurde der Versuch aus Beispiel 1 wiederholt, jedoch wurde statt des Pulverlacks ein Schmelzkleber (Vestamelt P 06, Degussa AG) eingesetzt. Nach dem Erkalten ließ sich nur eine geringfügige Verbesserung des Abperlverhaltens von Wasser beobachten.

### Beispiel 4:

Es wurde der Versuch aus Beispiel 1 wiederholt. Es wurde aber anstelle des hydrophoben Aerosils R 8200 eine hydrophile Kieselsäure (Sipernat 350, Degussa AG) eingesetzt. Nach dem Erkalten der Platte wurde mittels eines Hydrophobierungsreagenz (Antispread^{®}, Dr. Tillwich GmbH) nachträglich hydrophobiert. Der Lotuseffekt war bei diesem Beispiel voll ausgeprägt.

Anhand der Beispiele 1 bis 4 lässt sich erkennen, dass eine Hydrophobiedifferenz von Fixiermittelpartikel (Pulverlack oder Schmelzkleber) zu strukturbildenden Partikel (Aerosil R8200) eine Anbindung des Strukturbilders an die Matrix verhindert. Bei der Verwendung einer hydrophileren Fällungskieselsäure (Sipernat 350) wird die Anbindung nicht verhindert und der Strukturbildner sintert fest mit den Lack- oder Kleberpartikeln aneinander.

### Vergleichsbeispiel 2:

20 Gew.-% Methylmethacrylat, 20 Gew.-% Pentaeritrittetraacrylat und 60 Gew.-% Hexandioldimethacrylat wurden miteinander vermischt. Bezogen auf diese Mischung werden 14 Gew.-% Plex 4092 F, ein acrylisches Copolymerisat der Röhm GmbH und 2 Gew.-% UV-Härter Darokur 1173 zugesetzt und mindestens 60 min lang gerührt. Diese Mischung wurde als Träger auf eine 2 mm dicken PMMA-Platte in einer Dicke von 200 µm aufgetragen. Die Schicht wurde für 5 min angetrocknet. Auf diese angetrocknete Schicht wird eine Suspension von 10 Gew.-% sprühgetrocknete pyrogene Kieselsäure, Aeroperl 90/30 Degussa AG, eine Kieselsäure mit einer BET-Oberfläche von 90 m²/g, in Ethanol, aufgerakelt. Nach Härtung im UV-Licht und Behandlung mit dem Hydrophobierungsmittel Dynasilan 8262 wird die Oberfläche nur mit + beurteilt, d.h., der Tropfen bildet sich schlecht aus und klebt bis zu hohen Neigungswinkeln an der Oberfläche.

Der schlechte Lotuseffekt bei dem Vergleichsbeispiel ist auf Zuschmieren der zerklüfteten Struktur zurückzuführen. Dies geschieht durch Lösen von Monomeren in Ethanol. Vor dem Härten verdampft der Ethanol und der Härter bleibt bevorzugt in den zerklüfteten Strukturen zurück.

## Patentansprüche

1. Selbstreinigende Oberfläche, die eine künstliche, zumindest teilweise hydrophobe Oberflächenstruktur aus Erhebungen und Vertiefungen aufweist,
**dadurch gekennzeichnet,**
**dass** die Erhebungen und Vertiefungen durch auf der Oberfläche
- fixierte strukturbildende Partikel, die eine zerklüftete Struktur mit Erhebungen und/oder Vertiefungen im Nanometerbereich und hydrophobe Eigenschaften aufweisen, sowie
- die zur Fixierung eingesetzten Fixiermittelpartikel gebildet werden, die somit ebenfalls zur Bildung der Erhebungen und Vertiefungen beitragen,
wobei die Oberflächen der Fixiermittelpartikel mit benachbarten Oberflächen von Fixiermittelpartikeln und/oder strukturbildenden Partikeln zumindest teilweise aneinander haften, so dass die Struktur im Nanometerbereich der strukturbildenden Partikeln erhalten bleibt.

2. Selbstreinigende Oberfläche gemäß Anspruch 1,
**dadurch gekennzeichnet,**
**dass** die Fixiermittelpartikel Verbindungen ausgewählt aus der Gruppe der Schmelzkleber und/oder Pulverlacke umfassen.

3. Selbstreinigende Oberfläche gemäß Anspruch 2,
**dadurch gekennzeichnet,**
**dass** die Schmelzkleber und/oder Pulverlacke ausgewählt sind aus den Ethylen/Ethylacrylat-Copolymeren, Epoxydharze, Ethylen/Vinylacetat-Copolymeren, Polyamiden, Polyethersulfonen, Polyisobutenen oder Polyvinylbutyralen.

4. Selbstreinigende Oberfläche gemäß zumindest einem der Ansprüche 1 bis 3,
**dadurch gekennzeichnet,**
**dass** die Fixiermittelpartikel eine durchschnittliche Größe von kleiner 50 µm aufweisen.

5. Selbstreinigende Oberfläche gemäß zumindest einem der Ansprüche 1 bis 4,
**dadurch gekennzeichnet,**
**dass** die Partikel eine durchschnittliche Größe von kleiner 50 µm aufweisen.

6. Selbstreinigende Oberfläche gemäß Anspruch 5,
**dadurch gekennzeichnet,**
**dass** die Partikel eine durchschnittliche Größe von kleiner 30 µm aufweisen.

7. Selbstreinigende Oberfläche gemäß zumindest einem der Ansprüche 1 bis 6,
**dadurch gekennzeichnet,**
**dass** die Partikel aus zumindest einem Material, ausgewählt aus Silikaten, dotierten Silikaten, Mineralien, Metalloxiden, Kieselsäuren, Polymeren oder Metallpulver.

8. Verfahren zur Herstellung von selbstreinigenden Oberflächen gemäß zumindest einem der Ansprüche 1 bis 7, die eine künstliche, zumindest teilweise hydrophobe Oberflächenstruktur aus Erhebungen und Vertiefungen aufweisen, wobei die Erhebungen und Vertiefungen durch an der Oberfläche fixierte strukturbildende Partikel gebildet werden,
**dadurch gekennzeichnet,**
**dass** die strukturbildenden Partikel, die eine zerklüftete Struktur mit Erhebungen und/oder Vertiefungen im Nanometerbereich und hydrophobe Eigenschaften aufweisen, an der Oberfläche durch Fixiermittelpartikel fixiert werden, die ebenfalls zur Bildung der Erhebungen und Vertiefungen beitragen, und dass das Verfahren die folgenden Schritte umfasst:
a) Aufbringen von Fixiermittelpartikeln und strukturbildenden Partikeln, auf eine Oberfläche, wobei zuerst die Fixiermittelpartikel und anschließend die strukturbildenden Partikel auf die Oberfläche aufgebracht werden und
b) Anschmelzen der Fixiermittelpartikel zur Fixierung der strukturbildenden Partikel und der Fixiermittelpartikel auf der Oberfläche durch kurzzeitiges Erwärmen, wobei die Temperatur, bei der das Anschmelzen durchgeführt wird, und die Dauer des Anschmelzens so zu wählen sind, dass die Fixiermittelpartikel nur teilweise verschmelzen, wobei die Fixiermittelpartikel an ihren Berührungspunkten zusammenkleben und die Struktur, insbesondere die Struktur im Nanometerbereich, der strukturbildenden Partikel erhalten bleibt.

9. Verfahren gemäß Anspruch 8,
**dadurch gekennzeichnet,**
**dass** das Aufbringen durch Aufsprühen oder Aufpudern erfolgt.

10. Verfahren nach Anspruch 8 oder 9,
**dadurch gekennzeichnet,**
**dass** das Erwärmen mittels Infrarotstrahlung erfolgt.

11. Verfahren gemäß Anspruch 8 oder 10,
**dadurch gekennzeichnet,**
**dass** strukturbildende Partikel, die zumindest ein Material, ausgewählt aus Silikaten, dotierten Silikaten, Mineralien, Metalloxiden, Kieselsäuren, Metallen oder Polymeren aufweisen, eingesetzt werden.

12. Verfahren nach Anspruch 11,
**dadurch gekennzeichnet,**
**dass** strukturbildende Partikel eingesetzt werden, die eine durchschnittliche Größe von kleiner als 50 µm aufweisen.

13. Verfahren gemäß zumindest einem der Ansprüche 8 bis 12,
**dadurch gekennzeichnet,**
**dass** als Fixiermittelpartikel Verbindungen ausgewählt aus der Gruppe der Schmelzkleber und/oder Pulverlacke eingesetzt werden.

14. Verfahren gemäß Anspruch 13,
**dadurch gekennzeichnet,**
**dass** die Schmelzkleber und/oder Pulverlacke zumindest eine Verbindung, ausgewählt aus den Ethylen/Ethylacrylat-Copolymeren, Ethylen/Vinylacetat-Copolymeren, Epoxydharzen, Polyamiden, Polyethersulfonen, Polyisobutenen oder Polyvinylbutyralen umfassen.

15. Verfahren gemäß zumindest einem der Ansprüche 8 bis 14,
**dadurch gekennzeichnet,**
**dass** Fixiermittelpartikel eingesetzt werden, die eine durchschnittliche Größe von kleiner als 50 µm aufweisen.

16. Verwendung des Verfahrens gemäß zumindest einem der Ansprüche 8 bis 15, zur Herstellung von selbstreinigenden Oberflächen auf planaren oder nichtplanaren Gegenständen.

17. Verwendung des Verfahrens gemäß zumindest einem der Ansprüche 8 bis 15, zur Herstellung von selbstreinigender Oberflächen auf nicht starren Oberflächen von Gegenständen.

18. Verwendung des Verfahrens gemäß zumindest einem der Ansprüche 8 bis 15, zur Herstellung selbstreinigender Oberflächen auf flexible oder unflexible Wände im Sanitärbereich.

19. Verwendung des Verfahrens gemäß zumindest einem der Ansprüche 8 bis 15, zur Herstellung selbstreinigender Oberflächen auf korrosionsgeschützten Elementen im Hochbau.

## Claims

1. Self-cleaning surface which has an artificial, at least to some extent hydrophobic, surface structure made from elevations and depressions,
**characterized in that**
the elevations and depressions are formed by
- structure-forming particles secured to the surface, which have a fissured structure with elevations and/or depressions in the nanometer range and have hydrophobic properties, and by
- the fixative particles used for the securing process are formed, which therefore likewise contribute to the formation of the elevations and depressions,
where there is at least some mutual adhesion of the surfaces of the fixative particles to adjacent surfaces of fixative particles and/or structure-forming particles, so that the structure in the nanometer range of the structure-forming particles is retained.

2. Self-cleaning surface according to Claim 1,
**characterized in that**
the fixative particles encompass compounds selected from the group consisting of the hot-melt adhesives and/or powder coatings.

3. Self-cleaning surface according to Claim 2,
**characterized in that**
the hot-melt adhesives and/or powder coatings have been selected from the ethylene-ethyl acrylate copolymers, epoxy resins, ethylene-vinyl acetate copolymers, polyamides, polyether sulfones, polyisobutenes or polyvinyl butyrals.

4. Self-cleaning surface according to at least one of Claims 1 to 3,
**characterized in that**
the fixative particles have an average size of less than 50 µm.

5. Self-cleaning surface according to at least one of Claims 1 to 4,
**characterized in that**
the particles have an average size of less than 50 µm.

6. Self-cleaning surface according to Claim 5,
**characterized in that**
the particles have an average size of less than 30 µm.

7. Self-cleaning surface according to at least one of Claims 1 to 6,
**characterized in that**
the particles are composed of at least one material selected from silicates, doped silicates, minerals, metal oxides, silicas, polymers, and metal powders.

8. Process for producing self-cleaning surfaces according to at least one of Claims 1 to 7, which have an artificial, at least to some extent hydrophobic, surface structure made from elevations and depressions, where the elevations and depressions are formed by structure-forming particles secured to the surface,
**characterized in that**
the structure-forming particles, which have a fissured structure with elevations and/or depressions in the nanometer range and have hydrophobic properties are secured to the surface by using fixative particles which likewise contribute to formation of the elevations and depressions, and **in that** the process encompasses the following steps:
a) applying fixative particles and structure-forming particles to a surface, first applying the fixative particles and then applying the structure-forming particles to the surface, and
b) incipient melting of the fixative particles to secure the structure-forming particles and the fixative particles to the surface by brief heating, where the selection of the temperature at which the incipient melting is achieved and of the duration of the incipient melting is to be such that there is only partial melting of the fixative particles, whereupon the fixative particles agglutinate at their points of contact and the structure of the structure-forming particles, in particular the structure in the nanometer range, is retained.

9. Process according to Claim 8,
**characterized in that**
the application takes place by spray-application or powder-application.

10. Process according to Claim 8 or 9,
**characterized in that**
the heating takes place by means of infrared radiation.

11. Process according to Claim 8 or 10,
**characterized in that**
the structure-forming particles used comprise at least one material selected from silicates, doped silicates, minerals, metal oxides, silicas, metals, and polymers.

12. Process according to Claim 11,
**characterized in that**
the structure-forming particles used comprise particles whose average size is less than 50 µm.

13. Process according to at least one of Claims 8 to 12,
**characterized in that**
the fixative particles used comprise compounds selected from the group consisting of the hot-melt adhesives and/or powder coatings.

14. Process according to Claim 13,
**characterized in that**
the hot-melt adhesives and/or powder coatings encompass at least one compound selected from the ethylene-ethyl acrylate copolymers, ethylene-vinyl acetate copolymers, epoxy resins, polyamides, polyether sulfones, polyisobutenes, and polyvinyl butyrals.

15. Process according to at least one of Claims 8 to 14,
**characterized in that**
use is made of fixative particles which have an average size of less than 50 µm.

16. Use of the process according to at least one of Claims 8 to 15, for producing self-cleaning surfaces on planar or non-planar objects.

17. Use of the process according to at least one of Claims 8 to 15, for producing self-cleaning surfaces on non-rigid surfaces of objects.

18. Use of the process according to at least one of Claims 8 to 15, for producing self-cleaning surfaces on flexible or inflexible partitions in the sanitary sector.

19. Use of the process according to at least one of Claims 8 to 15, for producing self-cleaning surfaces on corrosion-protected elements in buildings above ground level.

## Revendications

1. Surface auto-nettoyante qui présente une structure superficielle synthétique au moins en partie hydrophobe constituée d'élévations et de dépressions,
**caractérisée en ce que** les élévations et dépressions sont formées sur la surface par :
- des particules structurelles fixes, qui présentent une structure crevassée avec des élévations et/ou des dépressions à l'échelle nanométrique et des propriétés hydrophobes, et
- des particules de fixateur utilisées pour la fixation, et qui contribuent aussi à la formation des élévations et des dépressions,
les surfaces des particules de fixateur adhérant au moins en partie aux surfaces voisines des particules de fixateur et/ou des particules structurelles, de sorte que la structure est conservée à l'échelle nanométrique des particules structurelles.

2. Surface auto-nettoyante selon la revendication 1, **caractérisée en ce que** les particules de fixateur comprennent des composés choisis dans le groupe constitué des colles thermoplastiques et/ou des peintures en poudre.

3. Surface auto-nettoyante selon la revendication 2, **caractérisée en ce que** les colles thermoplastiques et/ou les peintures en poudre sont choisies parmi les copolymères d'éthylène/éthylacrylate, les résines époxydes, les copolymères d'éthylène/acétate de vinyle, les polyamides, les sulfones de polyéther, les polyisobutènes ou les butyrales de polyvinyle.

4. Surface auto-nettoyante selon au moins l'une des revendications 1 à 3, **caractérisée en ce que** les particules de fixateur présentent une taille moyenne inférieure à 50 µm.

5. Surface auto-nettoyante selon au moins l'une des revendications 1 à 4, **caractérisée en ce que** les particules présentent une taille moyenne inférieure à 50 µm.

6. Surface auto-nettoyante selon la revendication 5, **caractérisée en ce que** les particules présentent une taille moyenne inférieure à 30 µm.

7. Surface auto-nettoyante selon au moins l'une des revendications 1 à 6, **caractérisée en ce que** les particules sont constituées au moins d'une matière choisie parmi les silicates, les silicates dopés, les minéraux, les oxydes de métaux, les acides siliciques, les polymères ou les poudres de métaux.

8. Procédé pour la fabrication de surfaces auto-nettoyantes selon au moins l'une des revendications 1 à 7, qui présentent une structure superficielle synthétique au moins en partie hydrophobe constituée d'élévations et de dépressions, les élévations et dépressions étant formées par des particules structurelles fixées sur la surface, **caractérisé en ce que** les particules structurelles, qui présentent une structure crevassée avec des élévations et/ou des dépressions à l'échelle nanométrique et des propriétés hydrophobes, sont fixées sur la surface par des particules de fixateur, qui contribuent également à la formation des élévations et des dépressions, et **en ce que** le procédé comprend les étapes suivantes :
a) dépôt de particules de fixateur et de particules structurelles sur une surface, les particules de fixateur étant tout d'abord déposées sur la surface, puis les particules structurelles et
b) fusion des particules de fixateur pour fixer les particules structurelles et les particules de fixateur sur la surface grâce à un réchauffement de courte durée, la température à laquelle la fusion est réalisée et la durée de la fusion étant choisies de sorte que les particules de fixateur ne soient fondues qu'en partie, les particules de fixateur adhérant à leurs points de contact et la structure, en particulier la structure à l'échelle nanométrique, des particules structurelles étant conservée.

9. Procédé selon la revendication 8, **caractérisé en ce que** le dépôt se fait par pulvérisation ou saupoudrage.

10. Procédé selon la revendication 8 ou 9, **caractérisé en ce que** le réchauffement se fait au moyen d'un rayonnement infrarouge.

11. Procédé selon la revendication 8 ou 10, **caractérisé en ce que** des particules structurelles, qui présentent au moins une matière choisie parmi les silicates, les silicates dopés, les minéraux, les oxydes de métaux, les acides siliciques, les métaux ou les polymères, sont utilisées.

12. Procédé selon la revendication 11, **caractérisé en ce qu'**on utilise des particules structurelles qui présentent une taille moyenne inférieure à 50 µm.

13. Procédé selon au moins l'une des revendications 8 à 12, **caractérisé en ce qu'**on utilise des composés choisis dans le groupe constitué des colles thermoplastiques et/ou des peintures en poudre comme particules de fixateur.

14. Procédé selon la revendication 13, **caractérisé en ce que** les colles thermoplastiques et/ou les peintures en poudre comprennent au moins un composé choisi parmi les copolymères d'éthylène/éthylacrylate, les copolymères d'éthylène/acétate de vinyle, les résines époxydes, les polyamides, les sulfones de polyéther, les polyisobutènes ou les butyrales de polyvinyle.

15. Procédé selon au moins l'une des revendications 8 à 14, **caractérisée en ce qu'**on utilise des particules de fixateur qui présentent une taille moyenne inférieure à 50 µm.

16. Utilisation du procédé selon au moins l'une des revendications 8 à 15, pour la fabrication de surfaces auto-nettoyantes sur des objets plans ou non plans.

17. Utilisation du procédé selon au moins l'une des revendications 8 à 15, pour la fabrication de surfaces auto-nettoyantes sur des surfaces non rigides d'objets.

18. Utilisation du procédé selon au moins l'une des revendications 8 à 15, pour la fabrication de surfaces auto-nettoyantes sur des parois flexibles ou non flexibles dans le domaine sanitaire.

19. Utilisation du procédé selon au moins l'une des revendications 8 à 15, pour la fabrication de surfaces auto-nettoyantes sur des éléments anticorrosion dans le bâtiment.
